# EUROPEAN PATENT SPECIFICATION

(11) **EP 3 584 139 B1**
(45) Date of publication and mention of the grant of the patent: **25.01.2023**
(21) Application number: 19275076.8
(22) Date of filing: 06.06.2019
(51) Int. Cl.: H01H 13/16, B61L 15/00, B61D 19/02

(54) **DETECTOR**
DETEKTOR
DÉTECTEUR

(30) Priority: 19.06.2018 JP 2018115731
(43) Date of publication of application: 25.12.2019
(73) Proprietor: Hitachi Metals, Ltd., Tokyo 108-0075 (JP)
(72) Inventor: AKIMOTO, Katsuya, Minato-ku, Tokyo 108-0075 (JP); SUZUKI, Shuichi, Minato-ku, Tokyo 108-0075 (JP); KAWASE, Kenji, Minato-ku, Tokyo 108-0075 (JP)
(74) Representative: Wilson Gunn

(56) References cited:
- JP-A- 2000 130 018
- JP-A- 2013 006 469
- JP-A- 2013 063 699
- JP-B1- 6 341 346

## Description

### TECHNICAL FIELD OF THE INVENTION

The present invention relates to a detector, and particularly, the present invention relates to a detector provided with a plurality of pressure-sensitive detecting members and a determining unit, which are installed in a vehicle, for example.

### BACKGROUND OF THE INVENTION

A technique regarding a pressure-sensitive detecting sensor installed in a door of a railway vehicle is described in Japanese Patent Application Publication No. 2006-100035 (hereinafter, referred to as "Patent Document 1"), for example. A long switch that includes a pair of long electrode plates as the pressure-sensitive detecting sensor is described in Patent Document 1. The pair of long electrode plates is disposed so as to face to each other. When an object (hereinafter, including a passenger, a baggage, and the like) is caught by the doors, the pair of long electrode plates is deformed so as to come into contact with each other, whereby the long switch becomes an ON state. This makes it possible to detect a catch by determining whether the long switch is in an ON state or an OFF state.

JP 2013 006469A discloses a device capable of detecting drag by using pressure chambers and using a pressure drop in the pressure chambers to detect the drag. JP6341346B1 discloses a pressure-sensitive pinching detection switch comprising a tubular pressure-sensitive detection member having a plurality of spaced apart electrode wires . JP 2000 120018A discloses a foreign material detector for a door that comprises an outside and an inside pressure sensing means.

### SUMMARY OF THE INVENTION

The invention relates to a detector as set out in the appended claims.

When an object is caught by doors, a person possessing the object usually carries out an operation to pull out the object toward the inside or the outside of a railway vehicle. By not only detecting a catch of the object, but also detecting whether pulling out of an object is carried out or not, it is possible to carry out an appropriate operation in accordance with a situation. However, the technique described in Patent Document 1 allows the long switch to detect a catch, but it is difficult to detect pulling out to determine both the catch and the pulling out.

The present invention has been made in view of the problem described above. It is an object of the present invention to provide a detector that can determine each of a catch and pulling out by using a plurality of pressure-sensitive detecting members.

An outline of representative invention of the present invention disclosed in the present application will briefly be explained as follows.

Namely, according to one embodiment not according to the invention, there is provided a detector includes: a plurality of pressure-sensitive detecting members; and a determining unit to which a detection signal is supplied from each of the plurality of pressure-sensitive detecting members. The determining unit is configured to determine a catch of an object and pulling out of an object on a basis of the plurality of detection signals respectively supplied from the plurality of pressure-sensitive detecting members.

Further, the detector is configured to determine, as the pulling out, pulling out of the object in a vertical direction with respect to a surface of the door and pulling out of the object in an oblique direction with the surface of the door.

Effects obtained by representative invention of the present invention disclosed in the present application will briefly be explained as follows.

Namely, it is possible to determine each of a catch and pulling out by using a plurality of pressure-sensitive detecting members.

### BRIEF DESCRIPTIONS OF THE DRAWINGS

The foregoing and other objects, features and advantages of the present invention will become more readily apparent from the following detailed description of embodiments of the present invention that proceeds with reference to the appending drawings:
FIG. 1 is a block diagram illustrating a configuration of a detector according to a first embodiment;
FIG. 2 is a cross-sectional view of pressure-sensitive detecting sensors according to the first embodiment;
FIGS. 3(A) and 3(B) are a perspective view of the pressure-sensitive detecting sensors according to the first embodiment;
FIG. 4 is a cross-sectional view for explaining a state of the pressure-sensitive detecting sensors according to the first embodiment;
FIG. 5 is a cross-sectional view for explaining a state of the pressure-sensitive detecting sensors according to the first embodiment;
FIG. 6 is a cross-sectional view for explaining a state of the pressure-sensitive detecting sensors according to the first embodiment;
FIG. 7 is an explanatory drawing for explaining determination by a microcomputer according to the first embodiment;
FIG. 8 is an explanatory drawing for explaining the determination by the microcomputer according to the first embodiment;
FIGS. 9(A) to 9(D) are timing charts illustrating a change in a voltage of each detection signal supplied to the microcomputerfrom the sensors according to the first embodiment;
FIG. 10 is a block diagram illustrating a configuration of a detector according to a second embodiment;
FIG. 11 is a flowchart diagram for explaining the overall processing by a processor according to the second embodiment;
FIG. 12 is a flowchart diagram for explaining a detecting process executed by the processor according to the second embodiment;
FIGS. 13(A) and 13(B) are views for explaining a memory according to the second embodiment; and
FIG. 14(A) and 14(B) are schematic views illustrating a configuration of a railway vehicle on which a detector according to the first embodiment is installed.

### DESCRIPTIONS OF EMBODIMENTS

Hereinafter, each of embodiments according to the present invention will be described with reference to the drawings . Further, in order to clarify the description, a width, a thickness, a shape, and the like of respective portions may be schematically illustrated in the drawings as compared with actual forms. However, each of them is merely one example, and the interpretation of the present invention is not limited by them.

Further, in this specification and the respective drawings, the same reference numerals are respectively assigned to the similar components described in the drawings, which have already been described. Detailed description thereof may be omitted appropriately.

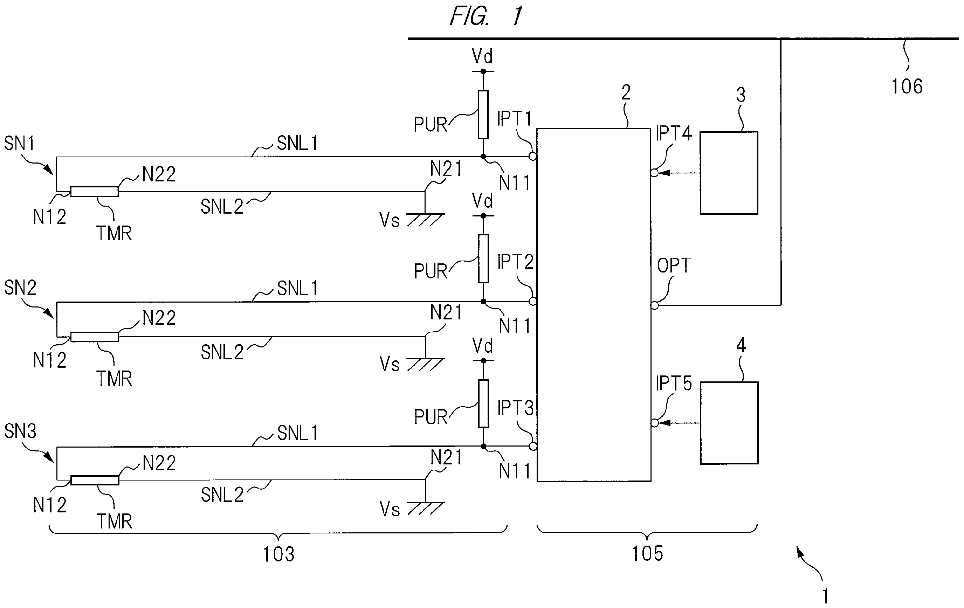

The first embodiment and figures 1-9 are not according to the invention and are present for illustration purposes only.

### (First Embodiment)

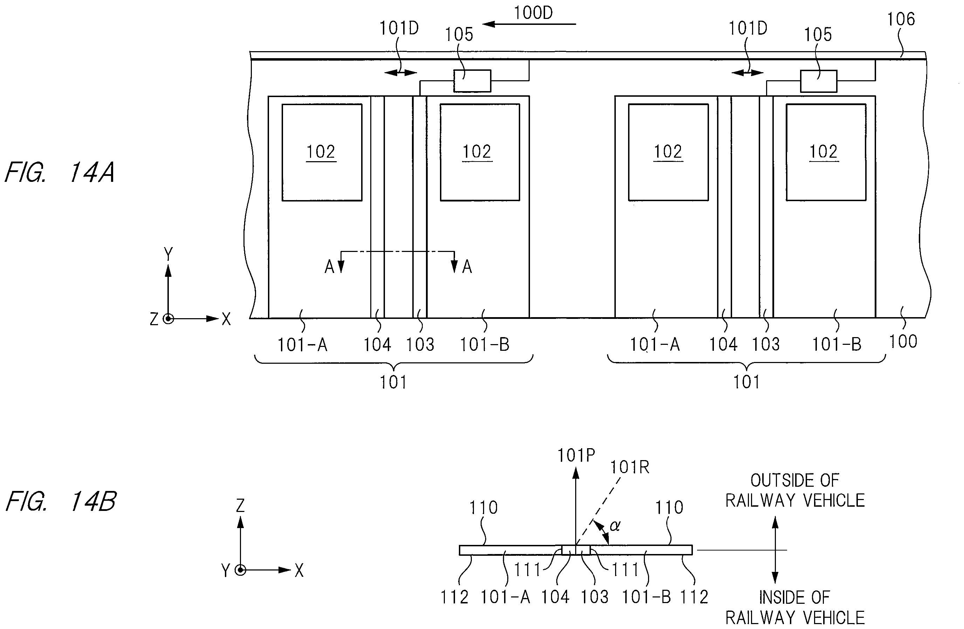

FIG. 14 is a schematic view illustrating a configuration of a railway vehicle on which a detector according to a first embodiment is installed. FIG. 14(A) illustrates a side view of a railway vehicle 100 when viewed from the outside of the railway vehicle 100. In FIG. 14(A), a reference numeral 101 denotes an entrance door of the railway vehicle 100. A plurality of entrance doors is provided in the railway vehicle 100. However, two entrance doors are drawn in FIG. 14 (A) . Movable doors 101-A and 101-B are installed in each entrance door 101 of the railway vehicle 100.

In FIG. 14(A), a reference numeral 103 denotes a pressure-sensitive detecting sensor that is installed at a side surface of the door 101-B, and a reference numeral 104 denotes a pressure-sensitive detecting sensor that is installed at a side surface of the door 101-A. When the doors 101-A and 101-B respectively move in a direction indicated by an arrow 101D in FIG. 14(A), the doors 101-A and 101-B are opened or closed. When the doors 101-A and 101-B are closed, the pressure-sensitive detecting sensors 103 and 104 respectively installed at the side surfaces of the doors 101-B and 101-A come into contact with each other. Note that in FIG. 14(A), a reference numeral 102 denotes a window that is provided each of the doors 101-A and 101-B.

Although the pressure-sensitive detecting sensor 103 will be described later in detail, the pressure-sensitive detecting sensor 103 includes a plurality of pressure-sensitive detecting members. When an object is caught (or interposed) between the pressure-sensitive detecting sensors 103 and 104, or when the caught object is being pulled out, at least one of the pressure-sensitive detecting members is deformed. The at least one pressure-sensitive detecting member then outputs a detection signal to a determining unit 105. Although it is not limited particularly in the first embodiment, the pressure-sensitive detecting sensor 104 is configured by a dummy pressure-sensitive detecting sensor. The pressure-sensitive detecting sensor 104 is also deformed when an object is caught (or interposed) between the pressure-sensitive detecting sensors 103 and 104, or when the caught object is being pulled out. However, the pressure-sensitive detecting sensor 104 outputs no detection signal. By configuring the pressure-sensitive detecting sensor 104 by the dummy pressure-sensitive detecting sensor in this manner, it is possible to suppress a cost spent for detection of a catch because any pressure-sensitive detecting member is not required and used.

The determining unit 105 is provided for each pressure-sensitive detecting sensor 103 installed in the entrance door 101. The determining unit 105 determines a caught state or a pulling-out state of the object on the basis of a detection signal from the corresponding pressure-sensitive detecting sensor 103. The determining unit 105 then outputs a determination result to a wiring 106 installed in the railway vehicle 100. Although it is not limited particularly, the wiring 106 is connected to a notifying unit (not illustrated in the drawings) provided in at least one of a conductor's compartment or a train driver's cab of the railway vehicle 100. The determination result from the determining unit 105 provided for each entrance door 101 is notified to at least one of a conductor or a train driver by the notifying unit.

FIG. 14(B) is a cross-sectional view illustrating a cross section taken along a line A-A in FIG. 14(A). A cross section of the doors 101-A and 101-B in a state where the doors 101-A and 101-B are closed is drawn in FIG. 14(B). Arrows X, Y and Z illustrated in FIG. 14 respectively denote coordinate axes. As illustrated in FIG. 14(B), on the basis of the doors 101-A and 101-B, a direction in which a value of a Z-coordinate increases denotes the outside of the railway vehicle 100, and an opposite direction thereof denotes the inside of the railway vehicle 100. In case of FIG. 14(A), the Z-coordinate increases from a back side of a paper on which FIG. 14(A) is drawn toward a front side of the paper.

The door 101-B includes an outer side surface 110, an inner side surface 112, and a side surface 111. The outer side surface 110 faces the outside of the railway vehicle 100. The inner side surface 112 faces the inside of the railway vehicle 100. The pressure-sensitive detecting sensor 103 is installed in the side surface 111. In the similar manner to the door 101-B, the door 101-A also includes an outer side surface 110, an inner side surface 112, and a side surface 111 in which the pressure-sensitive detecting sensor 104 is installed.

Although it will be described later in detail, presence or absence of pulling out is determined with respect to each of two kinds of pulling out in the present embodiment. The two kinds of pulling out to be determined will be described with reference to FIG. 14(B). The two kinds of pulling out include "pulling out in a vertical direction" and "pulling out in an oblique direction". The "pulling out in a vertical direction" means that an object caught between the doors 101-A and 101-B is pulled out in a direction perpendicular to main surfaces of the doors 101-A and 101-B (that is, the outer side surface 110 and the inner side surface 112) . The "pulling out in an oblique direction" means that an object caught between the doors 101-A and 101-B is pulled out in a direction oblique with respect to the main surfaces of the doors 101-A and 101-B. They will be explained with reference to FIG. 14 (B) . As the pulling out in the vertical direction, an object caught between the doors 101-A and 101-B is pulled out in a direction 101P perpendicular to the outer side surface 110. On the other hand, as the pulling out in the oblique direction, an object caught between the doors 101-A and 101-B is pulled out in a direction 101R by an angle α with respect to the outer side surface 110 of the door 101-B, for example. This angle α is in a range from 0° to 180° except for 90°, for example. The angle α may usually be about 0° to 60°.

An action of the pulling out in the vertical direction occurs when the railway vehicle 100 stops and a passenger carries out an operation to pull out an object caught between the doors 101-A and 101-B, for example. On the other hand, an action of pulling out in the oblique direction occurs when a passenger carries out an operation to pull out an object caught between the doors 101-A and 101-B during traveling of the railway vehicle 100. For example, in a case where a passenger carries out the operation to pull out a caught object while the object is pulled by the traveling railway vehicle 100, the pulling out in the oblique direction occurs. For that reason, the pulling out in the oblique direction may be referred to as "dragging a passenger".

The pulling out of an object toward the outside of the railway vehicle 100 has been described as an example. However, pulling out of an object toward the inside of the railway vehicle 100 can similarly be classified into pulling out in a vertical direction and pulling out in an oblique direction.

### <Basic Configuration of Detector>

FIG. 1 is a block diagram illustrating a configuration of a detector 1 according to the first embodiment. The detector 1 includes the pressure-sensitive detecting sensor 103 and the determining unit 105.

The determining unit 105 includes a microcomputer 2, an acceleration sensor 3, and a timer 4. The microcomputer 2 includes input terminals IPT1 to IPT5 and an output terminal OPT. Each of the input terminals IPT1 to IPT3 is connected to the pressure-sensitive detecting sensor 103. The input terminal IPT4 is connected to the acceleration sensor 3. The input terminal IPT5 is connected to the timer 4. Further, the output terminal OPT is connected to the wiring 106.

The microcomputer 2 determines, in accordance with a program, a catch or pulling out of an object on the basis of the detection signal from the pressure-sensitive detecting sensor 103, acceleration information, and time information. The detection signal is supplied to the input terminals IPT1 to IPT3. The acceleration information is supplied from the acceleration sensor 3. The time information is supplied from the timer 4. The microcomputer 2 then outputs a determination result to the output terminal OPT.

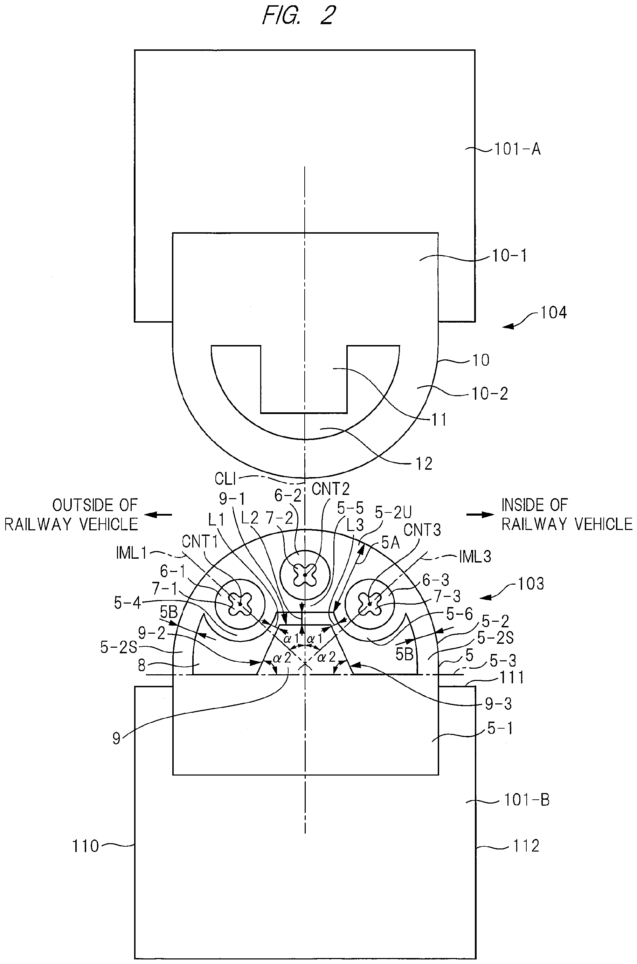

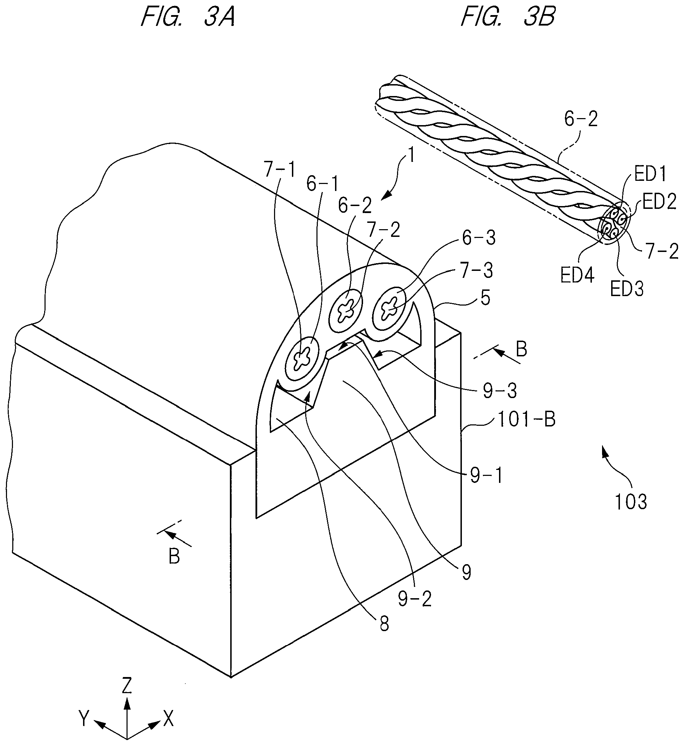

In the first embodiment, the pressure-sensitive detecting sensor 103 includes three sensors (hereinafter, referred to also as "a first sensor to a third sensor") SN1 to SN3. Each of the sensors SN1 to SN3 has the same structure. Thus, a configuration of the sensor will be described by using the sensor SN2 as an example. The sensor SN2 includes electrode wires SNL1 and SNL2, a pull-up resistor PUR, and a terminating resistor TMR. The electrode wires SNL1 and SNL2 are spaced from each other, and are disposed so as to extend along the side surface 111 of the door 101-B. The electrode wires SNL1 and SNL2 will be described later in detail with reference to FIG. 2 and FIG. 3. One end N11 of the electrode wire SNL1 is connected to a power supply voltage Vd via the pull-up resistor PUR, and is connected to an input terminal IPT2 of the microcomputer 2. Further, one end N21 of the electrode wire SNL2 is connected to a ground voltage Vs. The terminating resistor TMR for matching impedance is connected between the other end N12 of the electrode wire SNL1 and the other end N22 of the electrode wire SNL2.

For example, in a case where an object is caught, the electrode wires SNL1 and SNL2 are spaced from each other. Thus, a voltage at the one end N11 of the electrode wire SNL1 becomes a voltage VH (= Vd × a resistance value of the TMR / (the resistance value of the TMR + a resistance value of the PUR)). The voltage VH is defined by a voltage dividing circuit configured by the pull-up resistor PUR and the terminating resistor TMR. On the other hand, for example, in a case where an object is caught, the electrode wires SNL1 and SNL2 are moved to come close to each other, and comes into contact with each other. When the electrode wires SNL1 and SNL2 come into contact with each other, the voltage at the one end N11 of the electrode wire SNL1 becomes a voltage VL that is equal to the ground voltage Vs. In the following explanation, the voltage VH is called as a high level, and the voltage VL is called as a low level.

Herewith, in a case where an object is caught, the detection signal with the low level is supplied from the sensor SN2 to the corresponding input terminal IPT2. In a case where an object is not caught, the detection signal with the high level is supplied to the input terminal IPT2.

In the similar manner to the electrode wires SNL1 and SNL2 constituting the sensor SN2, the electrode wires SNL1 and SNL2 constituting each of the sensors SN1 and SN3 is also disposed so as to extend along the side surface 111 of the door 101-B. In a case where the electrode wires SNL1 and SNL2 in the sensor SN1 are spaced from each other, the detection signal with the high level is supplied from the sensor SN1 to the corresponding input terminal IPT1. In a case where the electrode wires SNL1 and SNL2 come into contact with each other, the detection signal with the low level is supplied from the sensor SN1 to the input terminal IPT1. Similarly, the detection signal with the high level or the detection signal with the low level is supplied from the sensor SN3 to the corresponding input terminal IPT3.

### <Pressure-Sensitive Detecting Sensor>

Next, a structure of the pressure-sensitive detecting sensor 103 will be described. FIG. 2 is a cross-sectional view of the pressure-sensitive detecting sensor according to the first embodiment. FIG. 3 is a perspective view of the pressure-sensitive detecting sensor according to the first embodiment. Here, FIG. 3 (A) is a perspective view of the pressure-sensitive detecting sensor 103. FIG. 3(B) is a perspective view of one of the pressure-sensitive detecting members included in the pressure-sensitive detecting sensor 103. FIG. 2 is a cross-sectional view when viewed from a cross section taken along a line B-B in FIG. 3(A).

The pressure-sensitive detecting sensor 103 includes a deformable cover member 5 installed on the side surface 111 of the door 101-B. The cover member 5 extends along an extending direction Y of the door 101-B. As illustrated in FIG. 3, the cover member 5 covers three pressure-sensitive detecting members 6-1 to 6-3 each of which extends in the same direction as that of the cover member 5. Further, the cover member 5 also covers a hollow part 8 that extends in the same direction as that of the cover member 5. The cover member 5 of the pressure-sensitive detecting sensor 103 is formed of rubber, for example. As illustrated in FIG. 2, a part of the cover member 5 (herein, a base portion) is embedded in the side surface 111 of the door 101-B.

When viewed as the cross section as illustrated in FIG. 2, the cover member 5 includes a thick base portion 5-1 and an elastic deforming portion 5-2 to be deformed. The base portion 5-1 is embedded in the door 101-B. The deforming portion 5-2 faces the dummy pressure-sensitive detecting sensor 104 installed in the door 101-A. The hollow part 8 is provided between the base portion 5-1 and the deforming portion 5-2. Further, the deforming portion 5-2 includes an upper surface deforming portion 5-2U and side surface deforming portions 5-2S. The upper surface deforming portion 5-2U is opposed to a base surface 5-3 of the base portion 5-1 when viewed as the cross section. The upper surface deforming portion 5-2U covers the pressure-sensitive detecting members 6-1 to 6-3. The side surface deforming portions 5-2S are formed integrally with the upper surface deforming portion 5-2U and the base portion 5-1 so as to couple the upper surface deforming portion 5-2U to the base portion 5-1.

The pressure-sensitive detecting member 6-2 that is a second pressure-sensitive detecting member is buried in the upper surface deforming portion 5-2U so that a center point CNT2 of the pressure-sensitive detecting member 6-2 is disposed on a center line CLI of the cover member 5. Further, the pressure-sensitive detecting member 6-3 that is a third pressure-sensitive detecting member is also buried in the upper surface deforming portion 5-2U that is located at one side with respect to the center line CLI (at a right side in FIG. 2) . Moreover, the pressure-sensitive detecting member 6-1 that is a first pressure-sensitive detecting member is also buried in the upper surface deforming portion 5-2U that is located at the other side with respect to the center line CLI (at a left side in FIG. 2). An angle between a virtual straight line IML3 and the center line CLI is the same angle α1 as an angle between a virtual straight line IML1 and the center line CLI. The virtual straight line IML3 is configured by connecting a predetermined point on the center line CLI to a center point CNT3 of the third pressure-sensitive detecting member 6-3. The virtual straight line IML1 is configured by connecting the predetermined point on the center line CLI to a center point CNT1 of the first pressure-sensitive detecting member 6-1. Although it is not limited particularly, the angle α1 is 45°. Thus, the pressure-sensitive detecting sensor 103 includes the upper surface deforming portion 5-2U and the side surface deforming portion 5-2S that are laterally symmetric on the basis of the center line CLI.

Each of the first to third pressure-sensitive detecting members 6-1 to 6-3 may be deformed so as to be squashed by being pressed to a receiving portion 9 (will be described later) when an object is caught or pulled out. When the first to third pressure-sensitive detecting members 6-1 to 6-3 are pressed to the receiving portion 9, a part of the upper surface deforming portion 5-2U lies between each of the first to third pressure-sensitive detecting members 6-1 to 6-3 and the receiving portion 9 as a cover portion. In FIG. 2, the cover portion is denoted by reference numerals 5-4 to 5-6.

In FIG. 2, one side with respect to the center line CLI denotes the inside of the railway vehicle 100, and the other side with respect to the center line CLI denotes the outside of the railway vehicle 100. In a case where an object is caught between the pressure-sensitive detecting sensors 103 and 104 or in a case where an object is pulled out therefrom, the deforming portion 5-2 is deformed, and at least one of the first to third pressure-sensitive detecting members 6-1 to 6-3 is squashed. In order that any of the first to third pressure-sensitive detecting members 6-1 to 6-3 is surely squashed, the receiving portion 9 is provided on the base portion 5-1 that receives at least one of the first to third pressure-sensitive detecting members 6-1 to 6-3 when the deforming portion 5-2 is deformed. As illustrated in FIG. 2, an outer shape of the receiving portion 9 has a trapezoidal shape in which an area of a cross section thereof becomes narrower toward the upper surface deforming portion 5-2U from the base portion 5-1. Namely, the receiving portion 9 includes an upper surface 9-1, a first slope 9-2, and a second slope 9-3. The upper surface 9-1 is parallel to the base surface 5-3 on which the base portion 5-1 is in contact with the hollow part 8. The first slope 9-2 causes the upper surface 9-1 to be coupled to the base surface 5-3. The second slope 9-3 causes the upper surface 9-1 to be coupled to the base surface 5-3. The receiving portion 9 is a trapezoidal shape in which the upper surface 9-1 facing the upper surface deforming portion 5-2U is narrower than a bottom surface facing the base surface 5-3. Therefore, an interior angle α2 between the base surface 5-3 and each of the first slope 9-2 and the second slope 9-3 exceeds 0° and is less than 90°.

The center line CLI of the cover member 5 passes through the center of the upper surface 9-1 of the receiving portion 9. The receiving portion 9 has a structure so as to be laterally symmetric on the basis of the center line CLI as illustrated in FIG. 2. Note that the receiving portion 9 is also formed of rubber as well as the cover member 5.

When the deforming portion 5-2 is deformed due to a catch or pulling out, the upper surface 9-1 of the receiving portion 9 acts as a receiving surface of the second pressure-sensitive detecting member 6-2 that faces the upper surface 9-1; the first slope 9-2 of the receiving portion 9 acts as a receiving surface of the first pressure-sensitive detecting member 6-1 that faces the first slope 9-2; and the second slope 9-3 of the receiving portion 9 acts as a receiving surface of the third pressure-sensitive detecting member 6-3 that faces the second slope 9-3. Namely, in a case where the second pressure-sensitive detecting member 6-2 is moved by deformation of the deforming portion 5-2, the second pressure-sensitive detecting member 6-2 is pressed toward the upper surface 9-1 of the receiving portion 9 via a cover portion 5-5. Further, in a case where the first pressure-sensitive detecting member 6-1 is moved by deformation of the deforming portion 5-2, the first pressure-sensitive detecting member 6-1 is pressed toward the first slope 9-2 of the receiving portion 9 via the cover portion 5-4. Moreover, in a case where the third pressure-sensitive detecting member 6-3 is moved by deformation of the deforming portion 5-2, the third pressure-sensitive detecting member 6-3 is pressed toward the second slope 9-3 of the receiving portion 9 via the cover portion 5-6.

In the first embodiment, the outer shape of the receiving portion 9 is a trapezoidal shape. When the deforming portion 5-2 is deformed, a pressure deforms the receiving portion 9. This makes it possible to reduce absorption of the pressure due to the deformation of the receiving portion 9. As a result, it is possible to increase an external force to be applied to each of the first to third pressure-sensitive detecting members 6-1 to 6-3.

Each of the first to third pressure-sensitive detecting members 6-1 to 6-3 has the same structure. Therefore, the pressure-sensitive detecting member will be described by using the second pressure-sensitive detecting member 6-2 as an example. As illustrated in FIG. 3(B), the second pressure-sensitive detecting member 6-2 is a tubular detecting member that includes electrode wires ED1 to ED4. The electrode wires ED1 to ED4 are spaced from each other. In the second pressure-sensitive detecting member 6-2, a member enclosing the spaced electrode wires ED1 to ED4 has elasticity. When an external force is applied to the second pressure-sensitive detecting member 6-2, a hollow part 7-2 is deformed so that a spaced distance among the electrode wires ED1 to ED4 varies. The plurality of electrode wires ED1 to ED4 constituting the second pressure-sensitive detecting member 6-2 is formed into a spiral shape along a longitudinal direction of pressure-sensitive detecting member 6-2. This makes it possible to detect an external force from all directions in a radial direction of the second pressure-sensitive detecting member 6-2.

In the first embodiment, as illustrated in FIG. 2 and FIG. 3, the first pressure-sensitive detecting member 6-1 constitutes the first sensor SN1 illustrated in FIG. 1, the second pressure-sensitive detecting member 6-2 constitutes the second sensor SN2, and the third pressure-sensitive detecting member 6-3 constitutes the third sensor SN3. Further, the electrode wires SNL1 and SNL2 constituting each of the sensors SN1 to SN3 correspond to the electrode wires ED1 and ED2 provided in each of the first to third pressure-sensitive detecting members 6-1 to 6-3, for example.

Application of an external force causes the spaced distance between the electrode wires ED1 and ED2 in the first pressure-sensitive detecting member 6-1 to be made smaller. When the electrode wire ED1 comes into contact with the electrode wire ED2, the detection signal with the low level is outputted from the first sensor SN1. In case of the second sensor SN2 and the third sensor SN3, when the electrode wire ED1 similarly comes into contact with the electrode wire ED2 in the corresponding second or third pressure-sensitive detecting member 6-2 or 6-3, the detection signal with the low level is outputted from the corresponding second or third sensor SN2 or SN3. When there is no external force, the electrode wires ED1 and ED2 are of course spaced from each other. Therefore, the detection signal with the high level is outputted from the corresponding one of the sensors SN1 to SN3.

Each of the first to third pressure-sensitive detecting members 6-1 to 6-3 is the same as a tubular member that is described in Japanese Patent Application Publication No. 2014-216300, for example. Therefore, further explanation of a configuration of each of the first to third pressure-sensitive detecting members 6-1 to 6-3 will be omitted.

As illustrated in FIG. 2, the dummy pressure-sensitive detecting sensor 104 on the side surface 111 of the door 101-A (FIG. 14 (B)) is configured by a base portion 10-1 and a cover member 10. The base portion 10-1 is embedded in the door 101-A. The cover member 10 includes a deformable deforming portion 10-2. This cover member 10 is also formed of rubber in the similar manner to the cover member 5. The deforming portion 10-2 is coupled to the base portion 10-1. A hollow part 12 is formed between the deforming portion 10-2 and the base portion 10-1. Further, a projection portion 11 that projects toward the deforming portion 10-2 is formed on the base portion 10-1.

For example, when an object is caught between the pressure-sensitive detecting sensors 103 and 104, the deforming portion 10-2 is deformed, whereby a shock to the caught object is absorbed. Since the dummy pressure-sensitive detecting sensor 104 does not output a detection signal, the dummy pressure-sensitive detecting sensor 104 can be regarded as an absorbing member installed in the door 101-A.

### <Catch, Pulling Out in Vertical Direction, and Pulling Out in Oblique Direction>

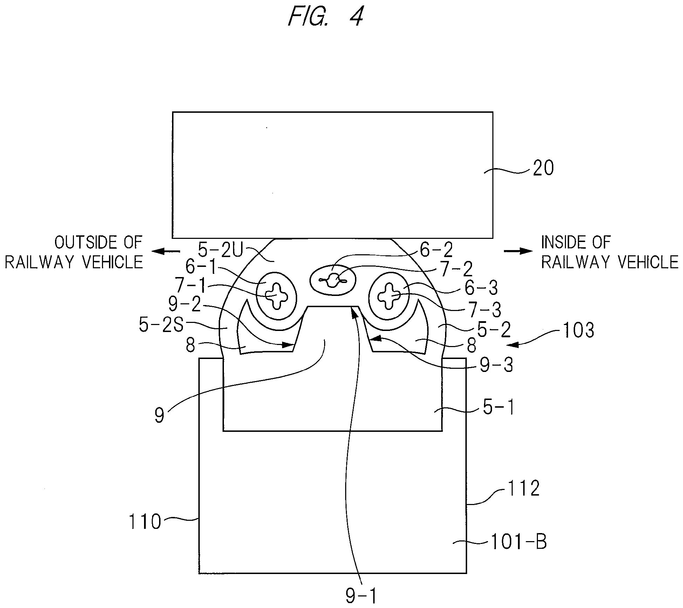

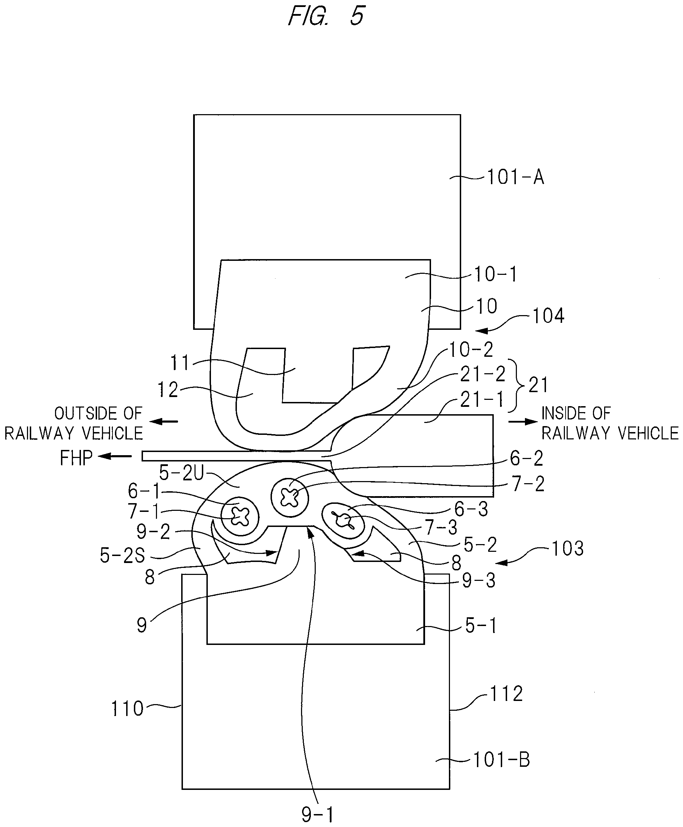

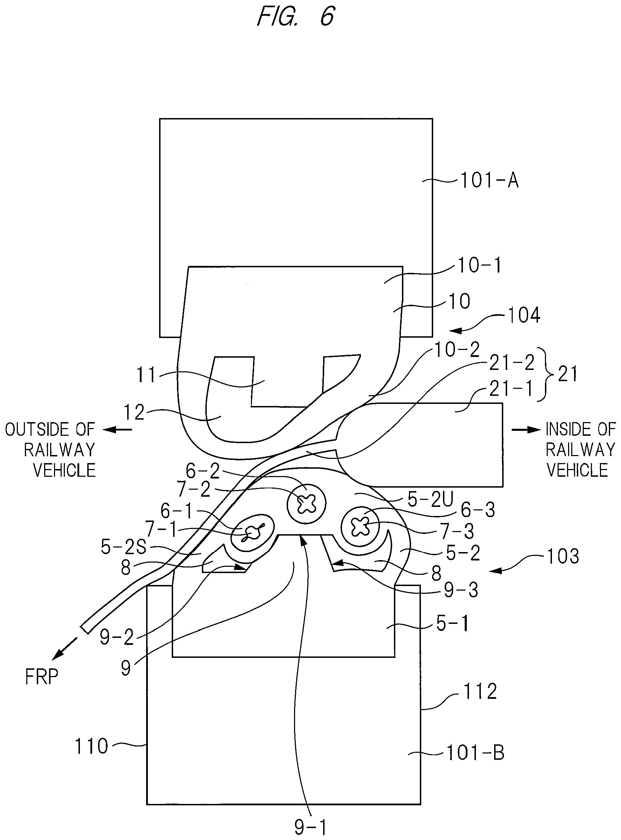

Each of FIG. 4 to FIG. 6 is a cross-sectional view for explaining a state of the pressure-sensitive detecting sensor according to the first embodiment. FIG. 4 illustrates a state of the pressure-sensitive detecting sensor 103 when an object 20 is caught. FIG. 5 illustrates a state of the pressure-sensitive detecting sensor 103 when an object 21 is pulled out in a vertical direction. Further, FIG. 6 illustrates a state of the pressure-sensitive detecting sensor 103 when the object 21 is pulled out in an oblique direction.

### <<Catch>>

A case where an object is caught will first be described. In FIG. 4, a reference numeral 20 denotes an object that is caught between the pressure-sensitive detecting sensors 103 and 104.

By catching the object 20, the deforming portion 5-2 is deformed. In this case, the upper surface deforming portion 5-2U is deformed to move in a direction toward the upper surface 9-1 of the receiving portion 9, and the side surface deforming portion 5-2S is deformed so as to rise in a right-to-left direction in FIG. 4.

When the upper surface deforming portion 5-2U is moved in the direction toward the upper surface 9-1, the second pressure-sensitive detecting member 6-2 is pressed to the upper surface 9-1, which faces the second pressure-sensitive detecting member 6-2, via the cover portion 5-5 (see FIG. 2). This causes the second pressure-sensitive detecting member 6-2 to be deformed so as to be squashed. This causes the electrode wires ED1 and ED2 in the second pressure-sensitive detecting member 6-2 to come into contact with each other. As a result, the detection signal with the low level is outputted from the second sensor SN2. On the other hand, each of the first and third pressure-sensitive detecting members 6-1 and 6-3 is not squashed enough to cause the electrode wires ED1 and ED2 to come into contact with each other. For that reason, the detection signal with the high level is outputted from each of the first sensor SN1 and the third sensor SN3.

### <<Pulling Out in Vertical Direction>>

FIG. 5 illustrates a state when the object 21 whose part is positioned inside the railway vehicle 100 is pulled out. In FIG. 5, an object portion of the object 21, which is positioned inside the railway vehicle 100, is denoted by a reference numeral 21-1, and an object portion of the object 21, which is coupled to the object portion 21-1 and extends outside the railway vehicle 100 is denoted by a reference numeral 21-2. FIG. 5 illustrates a state when an operation to pull out the object portion 21-2 by an external force FHP in a vertical direction with respect to the outer side surface 110 of the door 101-B is carried out.

The object portion 21-1 comes into contact with a right portion of the upper surface deforming portion 5-2U in the deforming portion 5-2 in FIG. 5. This causes the deforming portion 5-2 to be deformed so that the upper surface deforming portion 5-2U is moved in a left direction in FIG. 5 (that is, toward the outside of the railway vehicle 100). Since the upper surface deforming portion 5-2U is deformed so as to be moved toward the outside of the railway vehicle 100, the side surface deforming portion 5-2S is also deformed so as to incline toward the outside of the railway vehicle 100. Herewith, the third pressure-sensitive detecting member 6-3 disposed inside the railway vehicle 100 comes into contact with the second slope 9-3 of the receiving portion 9 as illustrated in FIG. 5. Further, the third pressure-sensitive detecting member 6-3 is pressed to the second slope 9-3 that faces the third pressure-sensitive detecting member 6-3, and is deformed so as to be squashed.

Since the third pressure-sensitive detecting member 6-3 is squashed, the third sensor SN3 outputs the detection signal with the low level. In this case, each of the first and second pressure-sensitive detecting member 6-1 and 6-2 is not squashed yet enough to cause the electrode wires ED1 and ED2 provided therein to come into contact with each other. For that reason, the detection signal with the high level is outputted from each of the first sensor SN1 and the second sensor SN2.

### <<Pulling Out in Oblique Direction>>

FIG. 6 illustrates a state when the object 21 whose part is positioned inside the railway vehicle 100 is pulled out. The object 21 is the same as that illustrated in FIG. 5. Unless FIG. 5, FIG. 6 illustrates a state when an operation to pull out the object portion 21-2 by an external force FRP in an oblique direction with respect to the outer side surface 110 of the door 101-B is carried out.

In this case, the object portion 21-2 comes into contact with a left portion of the upper surface deforming portion 5-2U in the deforming portion 5-2 in FIG. 6. This causes the deforming portion 5-2 to be deformed so that the upper surface deforming portion 5-2U is moved in a right direction in FIG. 6 (that is, toward the inside of the railway vehicle 100). Since the upper surface deforming portion 5-2U is deformed so as to be moved toward the inside of the railway vehicle 100, the side surface deforming portion 5-2S is also deformed so as to incline toward the inside of the railway vehicle 100. Herewith, the first pressure-sensitive detecting member 6-1 disposed outside the railway vehicle 100 comes into contact with the first slope 9-2 of the receiving portion 9 as illustrated in FIG. 6. Further, the first pressure-sensitive detecting member 6-1 is pressed to the first slope 9-2 that faces the first pressure-sensitive detecting member 6-1, and is deformed so as to be squashed.

Since the first pressure-sensitive detecting member 6-1 is squashed, the first sensor SN1 outputs the detection signal with the low level. In this case, each of the second and third pressure-sensitive detecting members 6-2 and 6-3 is not squashed yet enough to cause the electrode wires ED1 and ED2 to come into contact with each other. For that reason, the detection signal with the high level is outputted from each of the second sensor SN2 and the third sensor SN3.

### <Determination by Microcomputer>

The microcomputer 2 (see FIG. 1) determines a state of the detector 1 on the basis of the detection signal outputted from each of the sensors SN1 to SN3, and outputs a determination result from the output terminal OPT. A case where the microcomputer 2 does not refer to the acceleration information and the time information at the time of determination of a state ("non-reference") and a case where the microcomputer 2 refers to the acceleration information and the time information at the time of determination of a state ("reference") will be described.

### <<Not Refer to Acceleration Information and Time Information>>

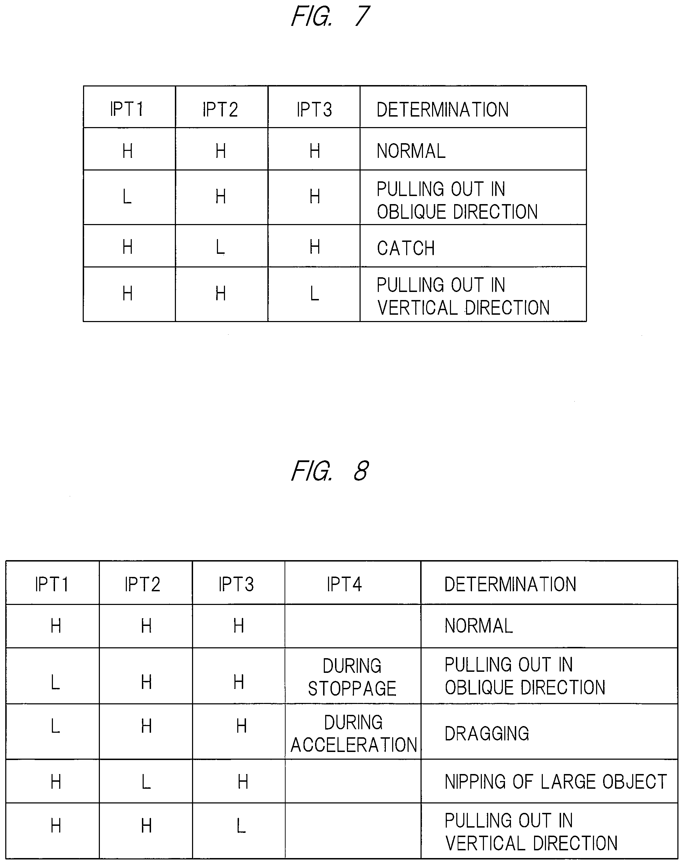

FIG. 7 is an explanatory drawing for explaining determination by the microcomputer according to the first embodiment.

In FIG. 7, a symbol "H" denotes that the detection signal supplied to each of the input terminals IPT1 to IPT3 is in the high level, and a symbol "L" denotes that the detection signal supplied to each of the input terminals IPT1 to IPT3 is in the low level. The microcomputer 2 determines the state of the detector 1 on the basis of a combination of voltages of the detection signals supplied from the first to third pressure-sensitive detecting members 6-1 to 6-3 to the input terminals IPT1 to IPT3.

In a case where all the detection signals respectively supplied to the input terminals IPT1 to IPT3 are in the high level, the electrode wires ED1 and ED2 does not come into contact with each other in any of the first to third pressure-sensitive detecting members 6-1 to 6-3. Therefore, the microcomputer 2 determines that the detector 1 is normal. Namely, the microcomputer 2 determines that the detector 1 is in a normal state where any object is not caught between the doors 101-A and 101-B and pulling out is not carried out.

In a case where the detection signal outputted from the first sensor SN1 disposed outside the railway vehicle 100 is in the low level and each of the detection signals outputted from the second sensor SN2 and the third sensor SN3 is in the high level, as explained above with reference to FIG. 6, the railway vehicle 100 is in a state where pulling out of an object in an oblique direction is carried out. For that reason, in a case where the detection signal with the low level is supplied to the input terminal IPT1, and the detection signal with the high level is supplied to each of the input terminals IPT2 and IPT3, the microcomputer 2 determines the railway vehicle 100 is in a state where pulling out in the oblique direction is carried out.

Further, in a case where the detection signal outputted from the second sensor SN2 disposed so as to face the door 101-A is in the low level and the detection signal outputted from each of the first sensor SN1 and the third sensor SN3 is in the high level, as explained above with reference to FIG. 4, the railway vehicle 100 is in a state where an object is caught between the doors 101-A and 101-B. For that reason, in a case where the detection signal with the low level is supplied to the input terminal IPT2 and the detection signal with the high level is supplied to each of the input terminals IPT1 and IPT3, the microcomputer 2 determines the railway vehicle 100 is in a state where the object is caught.

Moreover, in a case where the detection signal outputted from the third sensor SN3 disposed inside the railway vehicle 100 is in the low level and the detection signal outputted from each of the first sensor SN1 and the second sensor SN2 is in the high level, as explained above with reference to FIG. 5, the railway vehicle 100 is in a state where pulling out in the vertical direction is carried out. For that reason, in a case where the detection signal with the low level is supplied to the input terminal IPT3 and the detection signal with the high level is supplied to each of the input terminals IPT1 and IPT2, the microcomputer 2 determines the railway vehicle 100 is in a state where pulling out in the vertical direction is carried out.

Thus, on the basis of the three detection signals outputted from the one pressure-sensitive detecting sensor 103, the microcomputer 2 can determine each of normal, a catch, pulling out in the vertical direction, and pulling out in the oblique direction.

### <<Refer to Acceleration Information>>

Next, a case where the microcomputer 2 refers to the acceleration information supplied to the input terminal IPT4 when the microcomputer 2 determines whether pulling out in an oblique direction is carried out or not will be described. FIG. 8 is an explanatory drawing for explaining the determination by the microcomputer according to the first embodiment. Here, a case where the microcomputer 2 refers to the acceleration information when the detection signal with the low level is supplied to the input terminal IPT1 and the detection signal with the high level is supplied to each of the input terminals IPT2 and IPT3 will be described.

In a case where the acceleration information supplied to the input terminal IPT4 does not indicate that the railway vehicle 100 (see FIG. 14) is traveling during acceleration, the microcomputer 2 determines the state of the detector 1 where pulling out in the oblique direction is carried out in the similar manner to the case of FIG. 7. On the other hand, in a case where the acceleration information indicates that the railway vehicle 100 (see FIG. 14) is traveling during acceleration, the microcomputer 2 determines a state where dragging of a person occurs by the railway vehicle 100 during traveling. The train driver is notified of a determination result of the dragging via the notifying unit, for example. This allows the train driver to carry out an emergency response such as stopping of the railway vehicle 100.

The case where the microcomputer 2 refers to the acceleration information when the object is pulled out in the oblique direction has been explained as an example. However, the microcomputer 2 may similarly refer to the acceleration information to determine any of the state where an objection is caught and the state where an objection is pulled out in the vertical direction.

### <<Refer to Time Information>>

The microcomputer 2 determines the state of the detector 1 on the basis of a temporal change in a voltage of the detection signal supplied to each of the input terminals IPT1 to IPT3 while referring to the time information supplied to the input terminal IPT5. Here, a case where a size of the object caught between the doors 101-A and 101-B is determined will be described as an example.

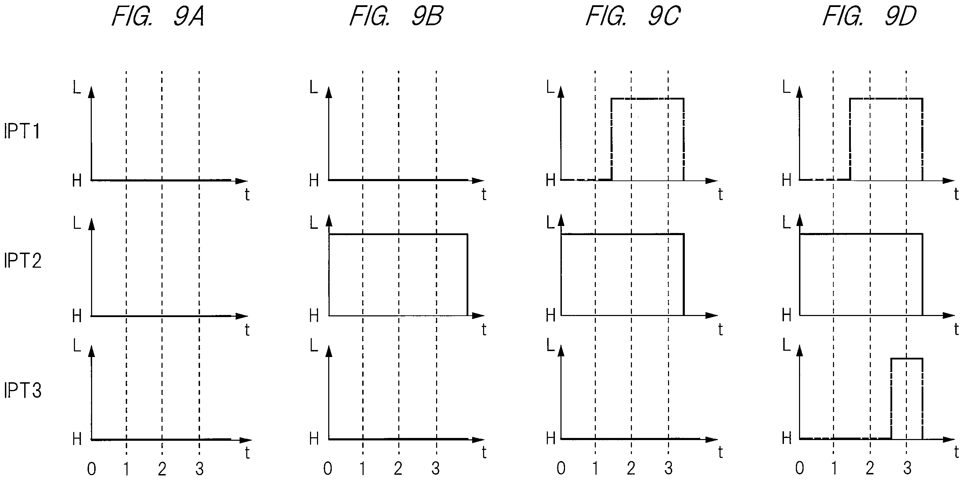

FIG. 9 is timing charts illustrating a change in a voltage of the detection signal supplied to each of the input terminals IPT1 to IPT3 of the microcomputer 2 from the sensor according to the first embodiment. Here, FIG. 9(A) is a timing chart when an object is caught between the doors 101-A and 101-B. FIG. 9(B) is a timing chart when a small object (that is, a small-sized object) is caught between the doors 101-A and 101-B. Further, FIG. 9(C) is a timing chart when an object larger than that illustrated in FIG. 9 (B) (that is, a medium-sized object) is caught between the doors 101-A and 101-B. FIG. 9(D) is a timing chart when an object further larger than that illustrated in FIG. 9(C) (that is, a large-sized object) is caught between the doors 101-A and 101-B. In each of FIGS. 9(A) to 9(D), scales 0 to 3 on a horizontal axis denote a time represented by the time information supplied to the input terminal IPT4 . Further, a vertical axis denotes a voltage of a detection signal. In each of FIGS. 9(A) to 9(D), an upper side denotes a low level (L), and a lower side denotes a high level (H).

As illustrated in FIG. 9(A), even though a time elapses from a time 0 to a time 3, a voltage of the detection signal supplied to each of the input terminals IPT1 to IPT3 is in a high level. In this case, the microcomputer 2 determines that it is normal and it is not a caught state. On the other hand, as illustrated in FIG. 9(B), in a case where the detection signal with the low level is supplied to the input terminal IPT2 for a period of time between the time 0 and the time 3 and the detection signal with the high level is supplied to each of the input terminals IPT1 and IPT3 for the period of time between the time 0 and the time 3, the microcomputer 2 determines that it is a state where a small object is caught between the doors 101-A and 101-B.

Further, as illustrated in FIG. 9(C), in a case where the detection signal with the low level is supplied to the input terminal IPT2 for the period of time between the time 0 and the time 3, a detection signal that changes from the high level to the low level at timing between a time 1 and a time 2 is supplied to the input terminal IPT1, and the detection signal with the high level is supplied to the input terminal IPT3 for the period of time between the time 0 and the time 3, then the microcomputer 2 determines that it is a state where a medium-sized object is caught between the doors 101-A and 101-B.

Moreover, as illustrated in FIG. 9(D), in a case where the detection signal with the low level is supplied to the input terminal IPT2 for the period of time between the time 0 and the time 3, the detection signal that changes from the high level to the low level at timing between the time 1 and the time 2 is supplied to the input terminal IPT1, and a detection signal that changes from the high level to the low level at timing between the time 2 and the time 3 is supplied to the input terminal IPT3, then the microcomputer 2 determines that it is a state where a large-sized object is caught between the doors 101-A and 101-B.

The larger the size of the object becomes, the more the number of pressure-sensitive detecting members squashed by the external force increases in accordance with the lapse of time. For that reason, as described above, by referring to the time information, it is possible to determine the size of the caught object.

In the above description, the case where the detection signal outputted from the first sensor SN1 changes from the high level to the low level between the time 1 and the time 2 in FIG. 9(C) has been described as an example. However, such a situation is not limited to this case. Namely, in a case where the detection signal outputted from the third sensor SN3 changes from the high level to the low level between the time 1 and the time 2, the microcomputer 2 may determine that the caught object is a medium-sized object. Further, the case where the detection signal outputted from the first sensor SN1 changes from the high level to the low level in advance of the detection signal outputted from the third sensor SN3 in FIG. 9(D) has been described. However, in a case where the voltage of the detection signal outputted from the third sensor SN3 changes from the high level to the low level in advance and the detection signal outputted from the first sensor SN1 then changes from the high level to the low level, the microcomputer 2 may determine that the caught object is a large-sized object.

The case where the microcomputer 2 refers to the acceleration information at the time of determination and the case where the microcomputer 2 refers to the time information at the time of determination have been described. However, the microcomputer 2 may refer to both the acceleration information and the time information at the time of determination.

### (Second Embodiment)

A basic detector has been described in the first embodiment. A more specific detector will be described in a second embodiment.

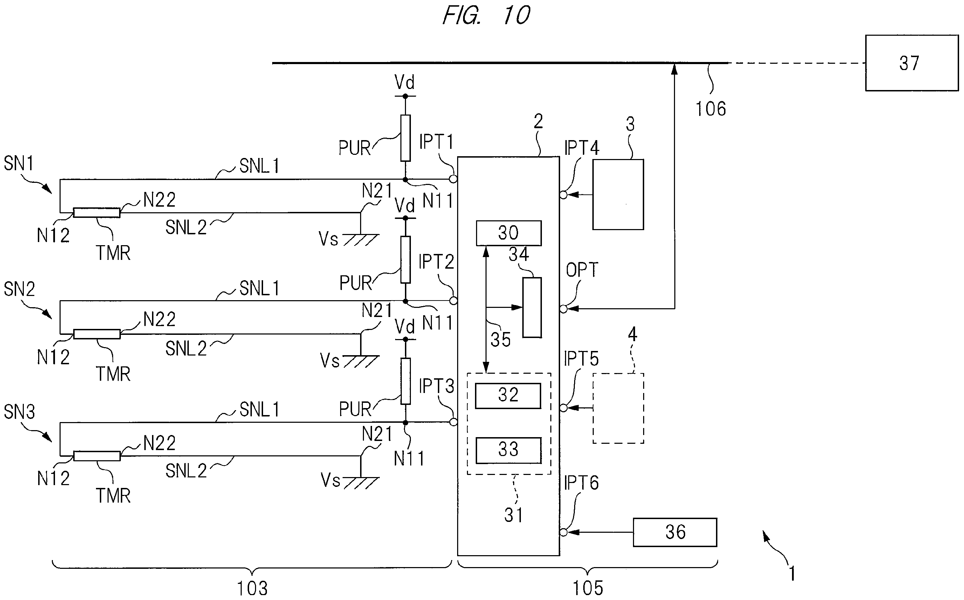

FIG. 10 is a block diagram illustrating a configuration of the detector 1 according to the second embodiment. Since FIG. 10 is similar to FIG. 1, differences will be described mainly. A main difference is that a configuration of a microcomputer 2 is illustrated in more detail in FIG. 10. Although the microcomputer 2 includes a plurality of circuit blocks, only necessary circuit blocks are drawn in FIG. 10. The microcomputer 2 includes a microprocessor (hereinafter, referred to as a "processor") 30, a memory 31, a notification register 34, and a bus 35. The processor 30 is connected to each of the memory 31 and the notification register 34 via the bus 35. The memory 31 includes a nonvolatile memory 32 and a volatile memory 33. A program and a state table (will be described later) are stored in advance in nonvolatile memory 32. The processor 30 reads out the program stored in the nonvolatile memory 32 via the bus 35, and executes a process in accordance with the program. In the course of the process, the processor 30 writes data and the like in the volatile memory 33, and reads out data and the like therefrom. Further, the processor 30 assigns a status register (will be described later) into a predetermined address area of the volatile memory 33 when the processor 30 executes the process in accordance with the program.

The processor 30 according to the second embodiment determines a voltage of a detection signal outputted from each of a first sensor SN1 to a third sensor SN3, and stores a determination result in the status register of the volatile memory 33. Further, the processor 30 refers to the state table stored in the nonvolatile memory 32 in advance. The processor 30 generates notification information from the determination result stored in the status register, and stores the generated notification information in the notification register 34. At least one of the conductor or the train driver is to be notified of the notification information if necessary. The notification information stored in the notification register 34 is supplied to a notifying unit 37 via a wiring 106.

The microcomputer 2 further includes an input terminal IPT6 compared with the configuration illustrated in FIG. 1. A reset signal is inputted to the input terminal IPT6 from a reset circuit 36. When the reset signal is inputted to the input terminal IPT6, the processor 30 and the volatile memory 33 are reset.

### <State Table>

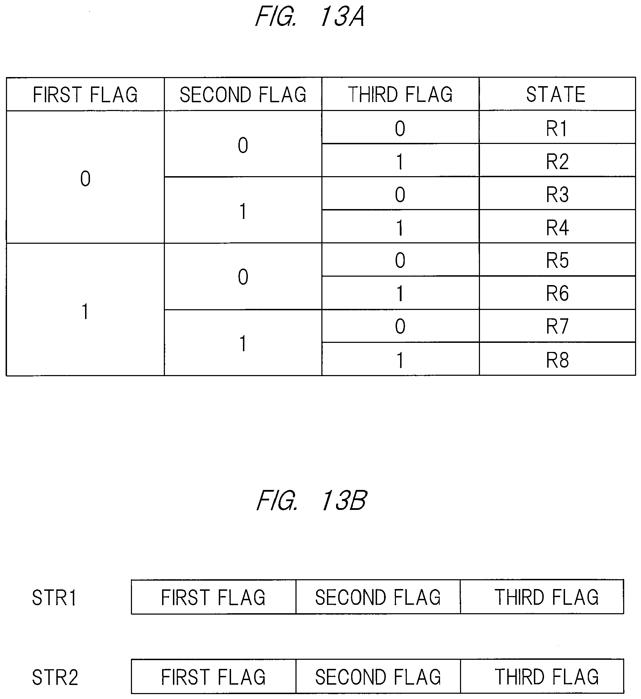

The state table stored in the nonvolatile memory 32 in advance will be described. FIG. 13 is a view for explaining the memory 31 according to the second embodiment. Here, FIG. 13(A) is a view for explaining the state table formed in the nonvolatile memory 32. Further, FIG. 13(B) is a view for explaining the status register formed in the volatile memory 33. Since the status register will be described later, its explanation will be omitted here.

The state table includes a "first flag", a "second flag", a "third flag", and a "state" as items. The "first flag" to the "third flag" respectively correspond to the detection signals outputted from the first sensor SN1 to the third sensor SN3. Namely, in the "first flag", "1" denotes a logical value corresponding to a low level of the detection signal outputted from the first sensor SN1, and "0" denotes a logical value corresponding to a high level of the detection signal outputted from the first sensor SN1. Similarly, in the "second flag" and the "third flag", "1" respectively denotes a logical value of each of low levels of the detection signals outputted from the second sensor SN2 and the third sensor SN3, and "0" denotes a logical value corresponding to each of high levels of the detection signals outputted from the second sensor SN2 and the third sensor SN3.

On the basis of a combination of the logical value (s) "1" and the logical value(s) "0" of the "first flag" to the "third flag", there are eight states R1 to R8. The state table is represented by combinations of the logical values of the detection signals outputted from the first sensor SN1 to the third sensor SN3. The states are stored in advance in a table illustrated in FIG. 13(A) as the states R1 to R8. For example, states such as normal, a catch, pulling out, dragging, or a failure of any pressure-sensitive detecting sensor are stored in the state table as the states R1 to R8.

As one example, "normal" is stored in an item of "state" as the state R1, "pulling out" is stored in an item of "state" as the state R2, and "catch" is stored in an item of "state" as the state R3. Further, "failure of any pressure-sensitive detecting sensor" is stored in an item of "state" as the state R6, and "dragging" is stored in an item of "state" as the state R5. Thus, the logical values corresponding to the detection signals respectively outputted from the first sensor SN1 to the third sensor SN3 and the states respectively specified by the combinations of the logical values of the detection signals are stored in advance in the state table.

The case where the nonvolatile memory 32 includes the state table has been described as an example. However, the configuration is not limited to this case. For example, the processor 30 may execute another program to create the state table described above in the volatile memory 33.

Next, processes executed by the processor 30 in accordance with the program will be described.

### <Resetting Process, Detecting Process, and Determining/Notifying Process>

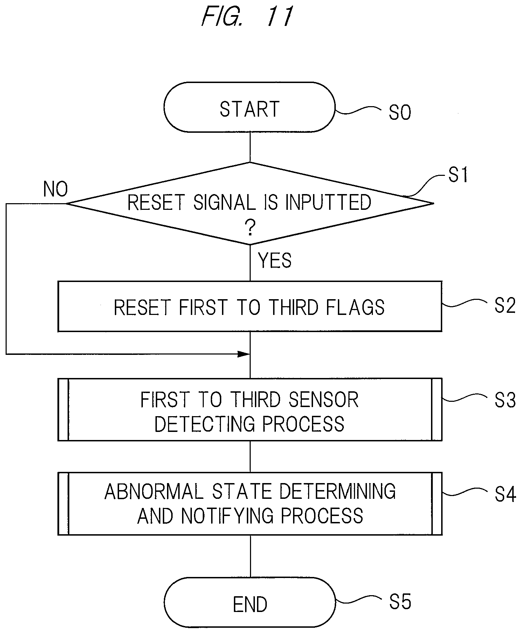

FIG. 11 is a flowchart diagram for explaining the overall processing executed by the processor according to the second embodiment. At Step S0, the processor 30 starts the overall processing. At Step S1, the processor 30 determines whether a reset signal is inputted or not. In a case where it is determined that a reset signal is inputted, the processor 30 subsequently executes a process at Step S2. In a case where it is determined that a reset signal is not inputted, the processor 30 subsequently executes a process at Step S3. In a case where the process at Step S2 is executed, first flag to third flag in a status register (will be described later) is reset, and the processor 30 subsequently executes the process at Step S3.

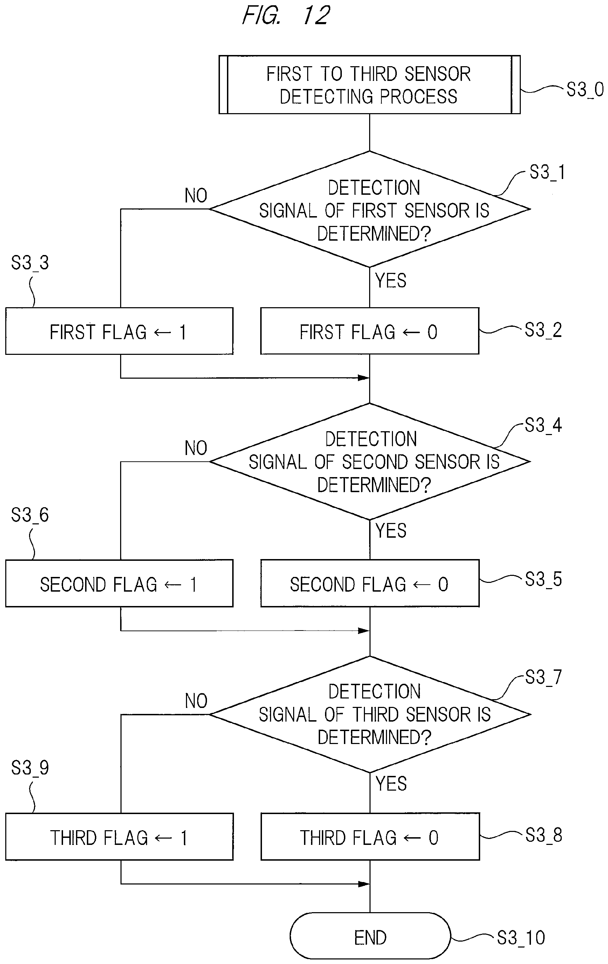

The processor 30 executes a detecting process at Step S3. Next, the detecting process will be described in detail with reference to FIG. 12 and FIG. 13(B).

### <<Detecting Process>>

FIG. 12 is a flowchart diagram for explaining the detecting process executed by the processor 30 according to the second embodiment.

In accordance with a program, the processor 30 assigns a status register STR1 as illustrated in FIG. 13(B) into a predetermined address area of the volatile memory 33. The status register STR1 contains a bit region for storing the "first flag" to the "third flag" corresponding to the first sensor SN1 to the third sensor SN3.

In FIG. 12, the processor 30 starts the detecting process at Step S3_0 by using the first sensor SN1 to the third sensor SN3.

At Step S3_1, the processor 30 determines a voltage of the detection signal supplied to an input terminal IPT1 from the first sensor SN1, that is, a first pressure-sensitive detecting member 6-1. In a case where the voltage of the detection signal is in the low level, the processor 30 determines that the first sensor SN1 detects an object, and subsequently executes a process at Step S3_2. On the other hand, in a case where the voltage of the detection signal is in the high level, the processor 30 determines that the first sensor SN1 does not detect any object, and subsequently executes a process at Step S3_3. At Step S3_2, the processor 30 sets a logical value "1" to a bit region for the "first flag" in the status register STR1 illustrated in FIG. 13 (B) . On the other hand, when the process at Step S3_3 is executed, the processor 30 sets a logical value "0" to the bit region for the "first flag" in the status register STR1 illustrated in FIG. 13(B). Herewith, in a case where the first sensor SN1 detects an object, the logical value "1" is set to the first flag corresponding to the first sensor SN1. In a case where the first sensor SN1 does not detect any object, the logical value "0" is set to the first flag.

When the process at Step S3_2 or S3_3 is terminated, the processor 30 subsequently executes a process at Step S3_4. At Step S3_4, the processor 30 determines a voltage of the detection signal outputted from the second sensor SN2 (that is, a second pressure-sensitive detecting member 6-2). In a case where the voltage of the detection signal is in the low level, the processor 30 determines that the second sensor SN2 detects an object, and subsequently executes a process at Step S3_5. On the other hand, in a case where the voltage of the detection signal is in the high level, the processor 30 determines that the second sensor SN2 does not detect any object, and subsequently executes a process at Step S3_6. At Step S3_5, the processor 30 sets a logical value "1" to a bit region for the "second flag" in the status register STR1 illustrated in FIG. 13(B). On the other hand, in a case where the process at Step S3_6 is executed, the processor 30 sets a logical value "0" to the bit region for the "second flag" in the status register STR1 illustrated in FIG. 13(B). Herewith, in a case where the second sensor SN2 detects an object, the logical value "1" is set to the second flag corresponding to the second sensor SN2. In a case where the second sensor SN2 does not detect any object, the logical value "0" is set to the second flag.

When the process at Step S3_5 or S3_6 is terminated, the processor 30 subsequently executes a process at Step S3_7. At Step S3_7, the processor 30 determines a voltage of the detection signal outputted from the third sensor SN3 (that is, a third pressure-sensitive detecting member 6-3). In a case where the voltage of the detection signal is in the low level, the processor 30 determines that the third sensor SN3 detects an object, and subsequently executes a process at Step S3_8. On the other hand, in a case where the voltage of the detection signal is in the high level, the processor 30 determines that the third sensor SN3 does not detect any object, and subsequently executes a process at Step S3_9. At Step S3_8, the processor 30 sets a logical value "1" to a bit region for the "third flag" in the status register STR1 illustrated in FIG. 13 (B) . On the other hand, when the process at Step S3_9 is executed, the processor 30 sets a logical value "0" to the bit region for the "third flag" in the status register STR1 illustrated in FIG. 13(B). Herewith, in a case where the third sensor SN3 detects an object and the logical value "1" is set to the third flag corresponding to the third sensor SN3 and the third sensor SN3 does not detect any object, the logical value "0" is set to the third flag.

When the process at Step S3_8 or S3_9 is terminated, the processor 30 next executes a process at Step S3_10. At Step S3_10, the processor 30 terminates (or ends) the detecting process.

When the detecting process is terminated, the processor 30 executes a process at Step S4 illustrated in FIG. 11. At Step S4, the processor 30 determines an abnormal state, a caught state, a pulling-out state and the like of the pressure-sensitive detecting sensor 103 by using the status register STR1 set in the detecting process at Step S3 and the state table stored in the nonvolatile memory 32. The processor 30 then generates notification information, and stores the generated notification information in the notification register 34. When the process at Step S4 is terminated, the processor 30 ends the overall processing at Step S5.

More specifically, the processor 30 compares the combination of the logical values of set to the "first flag" to the "third flag" in the status register STR1 with the combination of the logical values stored in the "first flag" to the "third flag" of the state table. On the basis of this comparison, the processor 30 selects the item of "state" corresponding to the items of the "first flag" to the "third flag" in the state table, which match up with the combination of the logical values of the "first flag" to the "third flag" in the status register STR1. The processor 30 stores the state stored in the selected item of "state" in the notification register 34.

For example, in a case where the logical values of the "first flag" to the "third flag" in the status register STR1 are respectively "0", "0", and "0", the processor 30 selects the state R1 corresponding to the items of the "first flag" to the "third flag", which match up with this combination of the logical values, and stores the selected state R1 in the notification register 34. In this case, since each of the first sensor SN1 to the third sensor SN3 does not detect any object, it is notified that a catch or the like does not occur and the doors 101-A and 101-B are normal. Further, in a case where the logical values of the "first flag" to the "third flag" in the status register STR1 are respectively "0", "0", and "1", the processor 30 selects the state R2 corresponding to the items of the "first flag" to the "third flag", which match up with this combination of the logical values, and stores the selected state R2 in the notification register 34. In this case, each of the first and second sensors SN1 and SN2 does not detect any object, but the third sensor SN3 detects an object. Therefore, it is notified that the state that has been described with reference to FIG. 5 occurs. For that reason, it is notified that pulling out occurs between the doors 101-A and 101-B.

Further, in a case where the logical values of the "first flag" to the "third flag" in the status register STR1 are respectively "0", "1", and "0", the processor 30 selects the state R3 corresponding to the items of the "first flag" to the "third flag", which match up with this combination of the logical values, and stores the selected state R3 in the notification register 34. In this case, each of the sensors SN1 and SN3 does not detect any object, but the sensor SN2 detects an object. Therefore, it is notified that the catch as described with reference to FIG. 4 occurs. For that reason, it is notified that a catch occurs. Moreover, in a case where the logical values of the "first flag" to the "third flag" in the status register STR1 are respectively "1", "0", and "0", the processor 30 selects the state R5 corresponding to the items of the "first flag" to the "third flag", which match up with this combination of the logical values, and stores the selected state R5 in the notification register 34. In this case, each of the second and third sensors SN2 and SN3 does not detect any object, but the first sensor SN1 detects an object. Therefore, it is notified that the state that has been described with reference to FIG. 6 occurs. Namely, it is notified that pulling out in an oblique direction occurs. Here, since "dragging" is stored in the item of "state" as the state R5, it is notified that dragging occurs in the second embodiment.

In a case where the logical values of the "first flag" to the "third flag" in the status register STR1 are respectively "1", "0", and "1", the processor 30 selects the state R6 corresponding to the "first flag" to the "third flag", which match up with this combination of the logical values, and stores the selected state R6 in the notification register 34. In this case, each of the first sensor SN1 and the third sensor SN3 detects an object, but the second sensor SN2 does not detect any object. Namely, in the pressure-sensitive detecting sensor 103, the second pressure-sensitive detecting member 6-2 disposed at the central portion is not squashed, and the first pressure-sensitive detecting member 6-1 and the third pressure-sensitive detecting member 6-3 respectively disposed outside and inside the railway vehicle 100 are squashed. Such a state does not occur usually. Therefore, it is estimated that abnormity such as a failure occurs in the pressure-sensitive detecting sensor 103, that is, the plurality of pressure-sensitive detecting members 6-1 to 6-3, and it is notified of the failure.

It is desirable that the processor 30 executes the process illustrated in FIG. 11 while the railway vehicle 100 is traveling. However, the processor 30 may also execute the process illustrated in FIG. 11 while the railway vehicle 100 stops. This makes it possible to detect and notify a catch, pulling out, and a failure while the railway vehicle 100 stops.

### <Modification Example>

In a modification example, a processor 30 assigns a second status register STR2 as illustrated in FIG. 13(B) to another predetermined address area of a volatile memory 33.

The processor 30 executes a process at Step S3 in a first time defined by a timer 4. As described above, the processor 30 respectively stores logical values from first to third sensors SN1 to SN3 in the first time in a "first flag" to a "third flag" of a status register (hereinafter, referred to as a "first status register" in modification example) STR1. Then, in a second time in which a predetermined time is elapsed from the first time, the processor 30 executes the process at Step S3 again. At this time, the processor 30 stores logical values from the sensors SN1 to SN3 in the second time in the "first flag" to the "third flag" of the second status register STR2.

After the processor 30 stores the logical values from the sensors SN1 to SN3 in the second status register STR2, the processor 30 executes a process at Step S4. In this case, at Step S4, the processor 30 refers to a state table illustrated in FIG. 13(B), and acquires a state corresponding to the logical values stored in the first status register STR1 and a state corresponding to the logical values stored in the second status register STR2. The processor 30 grasps transition in the states by a change in time. On the basis of the grasped transition in the states, the processor 30 generates notification information to be notified, and stores the notification information in a notification register 34.

For example, in a case where a relatively thick object is caught between the doors 101-A and 101-B and the relatively thick object is then pulled out toward the outside of a railway vehicle 100 in an oblique direction, the sensors SN1 to SN3 detects the relatively thick object as follows. By first catching the relatively thick object, the second sensor SN2 detects the relatively thick object, and a voltage of a detection signal outputted from the second sensor SN2 changes into a low level. Then, when the pulling out in the oblique direction is carried out, the first sensor SN1 detects the relatively thick object, a detection signal outputted from the first sensor SN1 changes into a low level. By referring to the state table illustrated in FIG. 13(A), a state R3 first occurs, and a state R7 occurs when a given time is elapsed.

In the modification example, since the notification information is generated on the basis of the transition in the states, it is possible to determine the pulling out of the relatively thick object in the oblique direction as described above, and to notify at least one of a train driver or a conductor of the railway vehicle 100 of such a situation. Namely, when the state corresponding to the logical value stored in the first status register STR1 is the state R3 and the state corresponding to the logical value stored in the second status register STR2 transits into the state R7, the processor 30 stores, as the notification information, a fact that the pulling out of the relatively thick object in the oblique direction is carried out in the notification register 34.

Here, the situation that the processor 30 can determine on the basis of the transition in the states has been described as one example. However, such a situation is not limited to this case. The processor 30 can determine various kinds of situations and notify at least one of the train driver or the conductor of each of the various kinds of situations.

Further, by configuring the nonvolatile memory 32 by an electrically rewritable nonvolatile memory such as a so-called flash memory, for example, a user of a detector 1 is allowed to voluntarily modify the state table. For example, by setting the content desired by the user as the items of "state" in the state table, it is possible to notify at least one of the train driver or the conductor of various kinds of notification information.

Notification by the notifying unit 37 may be notification by display of characters or marks or a warning sound. Further, it is desirable to notify at least one of the train driver or the conductor of the notification information for each entrance door. However, at least one of the train driver or the conductor may be notified of the notification information by all entrance doors or the predetermined number of entrance doors of the railway vehicle 100.

When the second pressure-sensitive detecting member 6-2 is squashed, a catch is detected. However, detection sensitivity at this time can be defined by a distance L2 between a cover portion 5-5 and a receiving portion 9 when a deforming portion 5-2 is not deformed (see FIG. 2). In this case, it is possible to heighten the detection sensitivity as the distance L2 is made shorter.

Further, by pulling out an object toward the outside of the railway vehicle 100, a third pressure-sensitive detecting member 6-3 is moved toward a second slope 9-3 of the receiving portion 9, and is deformed so as to be squashed. A detection signal in this time allows pulling out to be detected. Detection sensitivity for the pulling out is defined by a distance L3 and an interior angle α2. The distance L3 is a distance between a cover portion 5-6 and the second slope 9-3 of the receiving portion 9 when the deforming portion 5-2 is not deformed. Similarly, a first pressure-sensitive detecting member 6-1 is moved toward a first slope 9-2 of the receiving portion 9, and is deformed so as to be squashed. Detection sensitivity at this time can be defined by a distance L1 and the interior angle α2 (see FIG. 2) . The distance L1 is a distance between a cover portion 5-4 and the first slope 9-2 of the receiving portion 9 when the deforming portion 5-2 is deformed. It is possible to heighten the detection sensitivity as each of the distances L1 and L3 is made shorter. Further, it is also possible to heighten the detection sensitivity as the interior angle α2 is caused to approach 90°.

In the first and second embodiments, the case where the interior angle α2 formed by the first slope 9-2 is the same as the interior angle α2 formed by the second slope 9-3 has been described as an example. However, the configuration is not limited to this case. Namely, the interior angle α2 formed by the first slope 9-2 may be different from the interior angle α2 formed by the second slope 9-3.

When each of a catch and pulling out is detected, the upper surface 9-1, the first slope 9-2, or the second slope 9-3 of the receiving portion 9 respectively comes into contact with a surface of the cover portion 5-4, 5-5, or 5-6. In order to further facilitate deformation (or squash) of each of the first to third pressure-sensitive detecting members 6-1 to 6-3, it is desirable that a wall thickness of the cover member 5, which respectively intermediates between the surface of the cover portion 5-4, 5-5, and 5-6 and a surface of the first to third pressure-sensitive detecting members 6-1 to 6-3, is thinner than a wall thickness of the cover member 5, which respectively intermediates between the surface of the first to third pressure-sensitive detecting members 6-1 to 6-3 and an outer surface of the deforming portion 5-2.

In the first and second embodiments, as illustrated in FIG. 2, a wall thickness 5B of the side surface deforming portion 5-2S becomes thinner than a wall thickness 5A of the upper surface deforming portion 5-2U. For that reason, in a case where each of a catch and pulling out occurs, the side surface deforming portion 5-2S is easily deformed. Therefore, it is possible to heighten the detection sensitivity.

In order to easily squash each of the first to third pressure-sensitive detecting members 6-1 to 6-3, a strip-shaped projected portion may be provided on each of the upper surface 9-1, and the first and second slopes 9-2 and 9-3 of the receiving portion 9.

Although it is not limited particularly, the first to third pressure-sensitive detecting members 6-1 to 6-3 may be prepared separately from the cover member 5. In this case, when viewed as the cross section, slots are formed in the cover member 5. An area of each of the slots is larger than a cross-sectional area of each of the first to third pressure-sensitive detecting members 6-1 to 6-3. The first to third pressure-sensitive detecting members 6-1 to 6-3 that are prepared separately are respectively inserted into the slots in the cover member 5. This makes it possible to prevent each of the first to third pressure-sensitive detecting members 6-1 to 6-3 from being twisted when each of the first to third pressure-sensitive detecting members 6-1 to 6-3 is inserted into the corresponding slot.

Further, a cross section of each of the first to third pressure-sensitive detecting members 6-1 to 6-3 is formed into an elliptical shape. Moreover, an adhesive agent is injected into each of the slots, and each of the first to third pressure-sensitive detecting members 6-1 to 6-3 each having a round shape or the elliptical shape is then inserted into the corresponding slot.

In the first and second embodiments, each of the upper surface 9-1, the first slope 9-2 and the second slope 9-3 is a flat surface. However, each of the upper surface 9-1, the first slope 9-2 and the second slope 9-3 is not limited to the flat surface. For example, each of the upper surface 9-1, the first slope 9-2 and the second slope 9-3 may be a curved surface so long as the effects of the detector 1 according to the first and second embodiments can be achieved.

Moreover, the case where the cover member 5 covers the first to third pressure-sensitive detecting members 6-1 to 6-3 in FIG. 2 has been described as an example. However, the configuration is not limited to this case. Namely, each of the first to third pressure-sensitive detecting members 6-1 to 6-3 may be provided in the receiving portion 9.

Moreover, the case where the one pressure-sensitive detecting sensor 103 includes the three pressure-sensitive detecting members has been described in the first and second embodiments as an example. However, the number of pressure-sensitive detecting members included in the pressure-sensitive detecting sensor 103 is not limited to this example. The number of pressure-sensitive detecting members included in the pressure-sensitive detecting sensor 103 may be a plural number.

As described above, according to the detector 1 according to the first and second embodiments, it is possible to determine the catch, the pulling out in the vertical direction, and the pulling out in the oblique direction by using one pressure-sensitive detecting sensor 103. As a result, at least one of a conductor or a train driver can carry out a proper treatment in accordance with a determination result. Further, since the hollow part 8 is provided in the cover member 5, it is possible to improve a cushioning property of the pressure-sensitive detecting sensor 103.

As explained above, the present invention made by the inventors has been concretely described on the basis of the embodiments. However, the present invention is not limited to the embodiments described above, and it goes without saying that various modifications can be made without departing from the scope of the present invention as defined in the appended claims. For example, the railway vehicle 100 has been described in the embodiments as a target to which the present invention is applied. However, the applied target may be an automobile, a platform screen door, an elevator, or a back door.

## Claims

1. A detector (1) suitable for being installed in a vehicle (100) comprising:
a plurality of pressure-sensitive detecting members (6-1 - 6-3); and
a determining unit (105) configured to receive a plurality of detection signals from the plurality of pressure-sensitive detecting members (6-1 - 6-3),
wherein the determining unit (105) includes a microprocessor (30) configured to receive the plurality of the detection signals and acceleration information,
wherein the microprocessor (30) is configured to determine a catch of an object, pulling out of an object in a perpendicular direction perpendicular to a surface of a door of the vehicle (100), pulling out of an object in an oblique direction oblique with respect to the surface of the door of the vehicle (100), and dragging a passenger by the vehicle (100) travelling on a basis of the acceleration information and a combination of logical values of the plurality of the detection signals; and
wherein the determining unit is configured to determine a failure in each of the plurality of pressure-sensitive detecting members (6-1 - 6-3) on the basis of the combination of logical values of the plurality of detection signals.

2. The detector (1) according to claim 1,
wherein the plurality of pressure-sensitive detecting members (6-1 - 6-3) are suitable for being installed in a contact surface of a first door (101-A) of the vehicle (100) that contacts a second door (101-B) of the vehicle (100) when closed.

3. The detector (1) according to claim 1,
wherein the plurality of pressure-sensitive detecting members (6-1 - 6-3) that are components of the detector (1) are covered by a cover member (5), and each of the plurality of pressure-sensitive detecting members (6-1 - 6-3) includes a plurality of electrode wires (ED1 - ED4) spaced from each other.

4. The detector (1) according to claim 1,
wherein the microprocessor (30) is configured to execute determination of a state in accordance with temporal transition in a combination of logical values of the plurality of detection signals.

5. The detector (1) according to claim 1,
wherein the detector (1) comprises a notifying unit suitable for being installed in a conductor room of the vehicle (100) or a driver's cab,
wherein the determining unit (105) is configured to determine
a determination result,
wherein the notifying unit is configured to notify the determination result.

## Patentansprüche

1. Detektor (1), der zum Einbau in ein Fahrzeug (100) geeignet ist, umfassend:
eine Mehrzahl drucksensitiver Detektierungsbauteile (6-1 - 6-3); und
eine Bestimmungseinheit (105), die dazu konfiguriert ist, eine Mehrzahl von Detektionssignalen von der Mehrzahl drucksensitiver Detektierungsbauteile (6-1 - 6-3) zu empfangen,
wobei die Bestimmungseinheit (105) einen Mikroprozessor (30) enthält, der dazu konfiguriert ist, die Mehrzahl der Detektionssignale und Beschleunigungsinformationen zu empfangen,
wobei der Mikroprozessor (30) dazu konfiguriert ist, ein Erfassen eines Objekts, Herausziehen eines Objekts in einer orthogonalen Richtung orthogonal zu einer Oberfläche einer Tür des Fahrzeugs (100), Herausziehen eines Objekts in einer schrägen Richtung schräg in Bezug zu der Oberfläche der Tür des Fahrzeugs (100) und Mitschleifen eines Passagiers durch das sich fortbewegende Fahrzeug (100) auf Basis der Beschleunigungsinformation und einer Kombination von logischen Werten der Mehrzahl der Detektionssignale zu bestimmen; und
wobei die Bestimmungseinheit dazu konfiguriert ist, ein Versagen in jedem der Mehrzahl drucksensitiver Detektierungsbauteile (6-1 - 6-3) auf der Basis der Kombination von logischen Werten der Mehrzahl von Detektionssignalen zu bestimmen.

2. Detektor (1) nach Anspruch 1,
wobei die Mehrzahl drucksensitiver Detektierungsbauteile (6-1 - 6-3) geeignet sind, in einer Kontaktoberfläche einer ersten Tür (101-A) des Fahrzeugs (100) installiert zu sein, die, wenn geschlossen, eine zweite Tür (101-B) des Fahrzeugs (100) kontaktiert.

3. Detektor (1) nach Anspruch 1,
wobei die Mehrzahl drucksensitiver Detektierungsbauteile (6-1 - 6-3), die Komponenten des Detektors (1) sind, durch ein Abdeckbauteil (5) abgedeckt sind, und jedes der Mehrzahl drucksensitiver Detektierungsbauteile (6-1 - 6-3) eine Mehrzahl von Elektrodendrähten (ED1 - ED4) enthält, die voneinander beabstandet sind.

4. Detektor (1) nach Anspruch 1,
wobei der Mikroprozessor (30) dazu konfiguriert ist, eine Bestimmung eines Zustands gemäß einem zeitlichem Übergang in einer Kombination von logischen Werten der Mehrzahl von Detektionssignalen auszuführen.

5. Detektor (1) nach Anspruch 1,
wobei der Detektor (1) eine Meldeeinheit umfasst, die geeignet ist, in einem Führerraum des Fahrzeugs (100) oder einer Fahrerkabine installiert zu sein,
wobei die Bestimmungseinheit (105) dazu konfiguriert ist, ein Bestimmungsergebnis zu bestimmen, wobei die Meldeeinheit dazu konfiguriert ist, das Bestimmungsergebnis zu melden.

## Revendications

1. Détecteur (1) propre à être monté dans un véhicule (100) comprenant :
une pluralité d'éléments (6-1 - 6-3) de détection sensibles à la pression ; et
une unité (105) de détermination configurée pour recevoir une pluralité de signaux de détection de la pluralité d'éléments (6-1 - 6-3) de détection sensibles à la pression, dans lequel l'unité (105) de détermination comprend un microprocesseur (30) configuré pour recevoir la pluralité de signaux de détection et une information d'accélération,
dans lequel le microprocesseur (30) est configuré pour déterminer une prise d'un objet, en sortant un objet dans une direction perpendiculaire à une surface d'une portière du véhicule (100), en sortant un objet dans une direction oblique par rapport à la surface de la porte du véhicule (100), et en tirant un passager alors que le véhicule (100) circule sur la base de l'information d'accélération et d'une combinaison de valeurs logiques de la pluralité de signaux de détection ; et
dans lequel l'unité de détermination est configurée pour déterminer une défaillance de chacun de la pluralité d'éléments (6-1 - 6-3) de détection sensibles à la pression, sur la base de la combinaison de valeurs logiques de la pluralité de signaux de détection.

2. Détecteur (1) suivant la revendication 1,
dans lequel la pluralité d'éléments (6-1 - 6-3) de détection sensibles à la pression sont propres à être montés dans une surface de contact d'une première portière (101-A) du véhicule (100), qui est en contact avec une deuxième portière (101-B) du véhicule, lorsqu'elle est fermée.

3. Détecteur (1) suivant la revendication 1,
dans lequel la pluralité d'éléments (6-1 - 6-3) de détection sensibles à la pression, qui sont des constituants du détecteur (1), sont recouverts d'un élément (5) formant couvercle et chacun de la pluralité d'éléments (6-1 - 6-3) de détection sensibles à la pression a une pluralité de fils (ED1 - ED4) d'électrode à distance les uns des autres.

4. Détecteur (1) suivant la revendication 1,
dans lequel le microprocesseur (30) est configuré pour exécuter une détermination d'un état en accord avec une transition temporelle dans une combinaison de valeurs logiques de la pluralité de signaux de détection.

5. Détecteur (1) suivant la revendication 1,
dans lequel le détecteur (1) comprend une unité de notification propre à être montée dans un espace de conducteur du véhicule (100) ou dans un abri du mécanicien, dans lequel l'unité (105) de détermination est configurée pour déterminer un résultat de la détermination,
dans lequel l'unité de notification est configurée pour notifier le résultat de la détermination.
